# EUROPEAN PATENT APPLICATION

(11) **EP 4 418 780 A1**
(43) Date of publication of application: **21.08.2024**
(21) Application number: 22881335.8
(22) Date of filing: 12.10.2022
(51) Int. Cl.: H04W 72/02, H04W 72/54, H04W 72/04, H04W 76/28, H04W 92/18, H04W 4/40

(54) **MANAGEMENT OF SL DRX**

(30) Priority: 13.10.2021 KR 20210136119
(71) Applicant: LG Electronics Inc., Yeongdeungpo-gu Seoul 07336 (KR)
(72) Inventor: HWANG, Jinyup, Seoul 06772 (KR); YANG, Yoonoh, Seoul 06772 (KR); LEE, Sangwook, Seoul 06772 (KR); LIM, Suhwan, Seoul 06772 (KR); JANG, Jaehyuk, Seoul 06772 (KR); PARK, Jinwoong, Seoul 06772 (KR)
(74) Representative: Plasseraud IP
(86) International application number: PCT/KR2022/015368
(87) International publication number: WO 2023/063708

(57) **Abstract**

A disclosure of the present specification provides a method by which UE performs SL-DRX. The method comprises the steps of: the UE performing resource sensing for transmission of a sidelink (SL) signal in an SL-DRX off duration; determining an SL transmission resource on the basis of the result of the resource sensing; performing a transition between an SL-DRX off state of the UE and an SL-DRX on state of the UE; transmitting an SL signal to another UE via the SL transmission resource in the SL-DRX on state of the UE; and transmitting and receiving an uplink and downlink (Uu link) signal to and from a base station, wherein an interruption occurs in a first slot by the resource sensing, an interruption occurs in a second slot by the transition, and the user equipment skips transmission and reception of the Uu link signal in the first slot and the second slot.

## Description

### TECHNICAL FIELD

The present specification relates to mobile communications.

### BACKGROUND ART

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

### DESCLOSURE

### TECHNICAL PROBLEM

Currently, when sensing in the DRX off duration, the interruption caused by such sensing is not defined, which is a problem.

### TECHNICAL SOLUTION

The interruption by sensing in the DRX off duration is proposed.

### ADVANTAGEOUS EFFECTS

The present specification may have various effects.

For example, by defining the interruption caused by resource sensing in the SL-DRX off duration, resource sensing can be performed at SL-DRX off duration.

Effects that can be obtained through specific examples of the present specification are not limited to the effects listed above. For example, various technical effects that a person having ordinary skill in the related art can understand or derive from this specification may exist. Accordingly, the specific effects of the present specification are not limited to those explicitly described herein, and may include various effects that can be understood or derived from the technical characteristics of the present specification.

### BRIEF DESCRIPTION OF THE DRAWINGS

FIG. 1 shows an example of a communication system to which implementations of the present disclosure is applied.
FIG. 2 shows an example of wireless devices to which implementations of the present disclosure is applied.
FIG. 3 shows an example of a wireless device to which implementations of the present disclosure is applied.
FIG. 4 shows an example of UE to which implementations of the present disclosure is applied.
FIG. 5 shows examples of 5G system architectures.
FIG. 6 is an example diagram illustrating the concept of V2X.
FIG. 7 is an illustrative diagram of a configuration of a communication device installed on a vehicle for V2X communication.
FIG. 8 illustrates an example of interference in partial sensing according to the disclosure of the present specification.
FIG. 9 shows a sensing operation in a Uu link and a sidelink according to disclosure of the present specification.
FIG. 10 shows the procedure of the UE according to the disclosure of this specification.

### MODE FOR INVENTION

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5GNR (new radio).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C" .

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

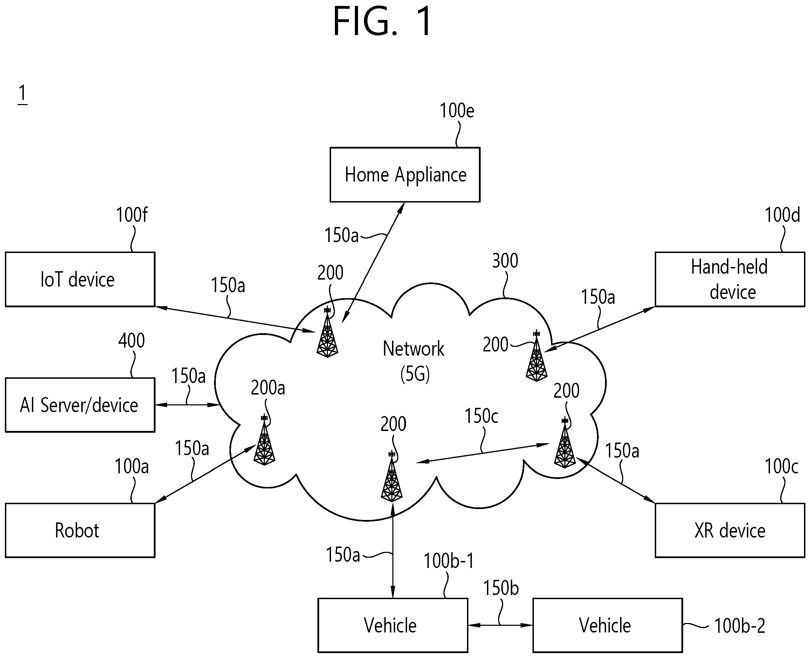

**FIG. 1** **shows an example of a communication system to which implementations of the present disclosure is applied.**

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/SG devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The UAV may be, for example, an aircraft aviated by a wireless control signal without a human being onboard.

The VR device may include, for example, a device for implementing an object or a background of the virtual world. The AR device may include, for example, a device implemented by connecting an object or a background of the virtual world to an object or a background of the real world. The MR device may include, for example, a device implemented by merging an object or a background of the virtual world into an object or a background of the real world. The hologram device may include, for example, a device for implementing a stereoscopic image of 360 degrees by recording and reproducing stereoscopic information, using an interference phenomenon of light generated when two laser lights called holography meet.

The public safety device may include, for example, an image relay device or an image device that is wearable on the body of a user.

The MTC device and the IoT device may be, for example, devices that do not require direct human intervention or manipulation. For example, the MTC device and the IoT device may include smartmeters, vending machines, thermometers, smartbulbs, door locks, or various sensors.

The medical device may be, for example, a device used for the purpose of diagnosing, treating, relieving, curing, or preventing disease. For example, the medical device may be a device used for the purpose of diagnosing, treating, relieving, or correcting injury or impairment. For example, the medical device may be a device used for the purpose of inspecting, replacing, or modifying a structure or a function. For example, the medical device may be a device used for the purpose of adjusting pregnancy. For example, the medical device may include a device for treatment, a device for operation, a device for (in vitro) diagnosis, a hearing aid, or a device for procedure.

The security device may be, for example, a device installed to prevent a danger that may arise and to maintain safety. For example, the security device may be a camera, a closed-circuit TV (CCTV), a recorder, or a black box.

The FinTech device may be, for example, a device capable of providing a financial service such as mobile payment. For example, the FinTech device may include a payment device or a point of sales (POS) system.

The weather/environment device may include, for example, a device for monitoring or predicting a weather/environment.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., SG NR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

AI refers to the field of studying artificial intelligence or the methodology that can create it, and machine learning refers to the field of defining various problems addressed in the field of AI and the field of methodology to solve them. Machine learning is also defined as an algorithm that increases the performance of a task through steady experience on a task.

Robot means a machine that automatically processes or operates a given task by its own ability. In particular, robots with the ability to recognize the environment and make self-determination to perform actions can be called intelligent robots. Robots can be classified as industrial, medical, home, military, etc., depending on the purpose or area of use. The robot can perform a variety of physical operations, such as moving the robot joints with actuators or motors. The movable robot also includes wheels, brakes, propellers, etc., on the drive, allowing it to drive on the ground or fly in the air.

Autonomous driving means a technology that drives on its own, and autonomous vehicles mean vehicles that drive without user's control or with minimal user's control. For example, autonomous driving may include maintaining lanes in motion, automatically adjusting speed such as adaptive cruise control, automatic driving along a set route, and automatically setting a route when a destination is set. The vehicle covers vehicles equipped with internal combustion engines, hybrid vehicles equipped with internal combustion engines and electric motors, and electric vehicles equipped with electric motors, and may include trains, motorcycles, etc., as well as cars. Autonomous vehicles can be seen as robots with autonomous driving functions.

Extended reality is collectively referred to as VR, AR, and MR. VR technology provides objects and backgrounds of real world only through computer graphic (CG) images. AR technology provides a virtual CG image on top of a real object image. MR technology is a CG technology that combines and combines virtual objects into the real world. MR technology is similar to AR technology in that they show real and virtual objects together. However, there is a difference in that in AR technology, virtual objects are used as complementary forms to real objects, while in MR technology, virtual objects and real objects are used as equal personalities.

NR supports multiples numerologies (and/or multiple subcarrier spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., FR1 and FR2. The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include narrowband internet-of-things (NB-IoT) technology for low-power communication as well as LTE, NR and 6G. For example, NB-IoT technology may be an example of low power wide area network (LPWAN) technology, may be implemented in specifications such as LTE Cat NB 1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

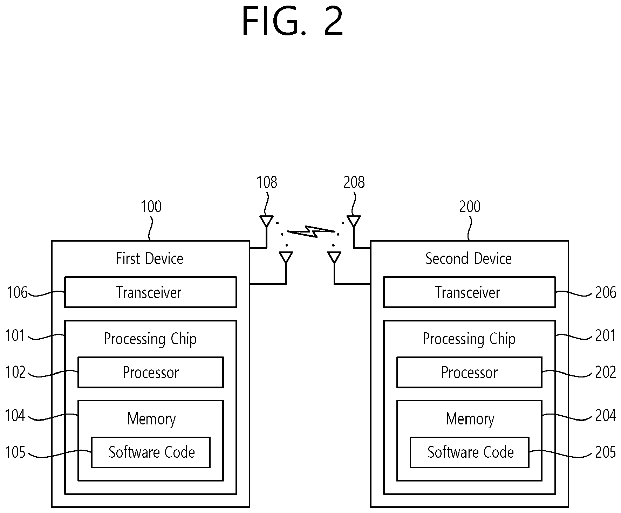

**FIG. 2** **shows an example** of wireless **devices to which implementations of the present disclosure is applied.**

Referring to FIG. 2, a first wireless device 100 and a second wireless device 200 may transmit/receive radio signals to/from an external device through a variety of RATs (e.g., LTE and NR).

In FIG. 2, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. It is exemplarily shown in FIG. 2 that the memory 104 is included in the processing chip 101. Additional and/or alternatively, the memory 104 may be placed outside of the processing chip 101.

The processor 102 may control the memory 104 and/or the transceiver 106 and may be configured to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a software code 105 which implements instructions that, when executed by the processor 102, perform the descriptions, functions, procedures, suggestions, methods and/or operational flowcharts disclosed in the present disclosure. For example, the software code 105 may implement instructions that, when executed by the processor 102, perform the descriptions, functions, procedures, suggestions, methods and/or operational flowcharts disclosed in the present disclosure. For example, the software code 105 may control the processor 102 to perform one or more protocols. For example, the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with radio frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. It is exemplarily shown in FIG. 2 that the memory 204 is included in the processing chip 201. Additional and/or alternatively, the memory 204 may be placed outside of the processing chip 201.

The processor 202 may control the memory 204 and/or the transceiver 206 and may be configured to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a software code 205 which implements instructions that, when executed by the processor 202, perform the descriptions, functions, procedures, suggestions, methods and/or operational flowcharts disclosed in the present disclosure. For example, the software code 205 may implement instructions that, when executed by the processor 202, perform the descriptions, functions, procedures, suggestions, methods and/or operational flowcharts disclosed in the present disclosure. For example, the software code 205 may control the processor 202 to perform one or more protocols. For example, the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as physical (PHY) layer, media access control (MAC) layer, radio link control (RLC) layer, packet data convergence protocol (PDCP) layer, radio resource control (RRC) layer, and service data adaptation protocol (SDAP) layer). The one or more processors 102 and 202 may generate one or more protocol data units (PDUs) and/or one or more service data unit (SDUs) according to the descriptions, functions, procedures, suggestions, methods and/or operational flowcharts disclosed in the present disclosure. The one or more processors 102 and 202 may generate messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, suggestions, methods and/or operational flowcharts disclosed in the present disclosure may be implemented using firmware or software and the firmware or software may be configured to include the modules, procedures, or functions. Firmware or software configured to perform the descriptions, functions, procedures, suggestions, methods and/or operational flowcharts disclosed in the present disclosure may be included in the one or more processors 102 and 202 or stored in the one or more memories 104 and 204 so as to be driven by the one or more processors 102 and 202. The descriptions, functions, procedures, suggestions, methods and/or operational flowcharts disclosed in the present disclosure may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and down-convert the OFDM signals into OFDM baseband signals by their (analog) oscillators and/or filters under the control of the one or more processors 102 and 202.

In the implementations of the present disclosure, a UE may operate as a transmitting device in uplink (UL) and as a receiving device in downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be configured to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be configured to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

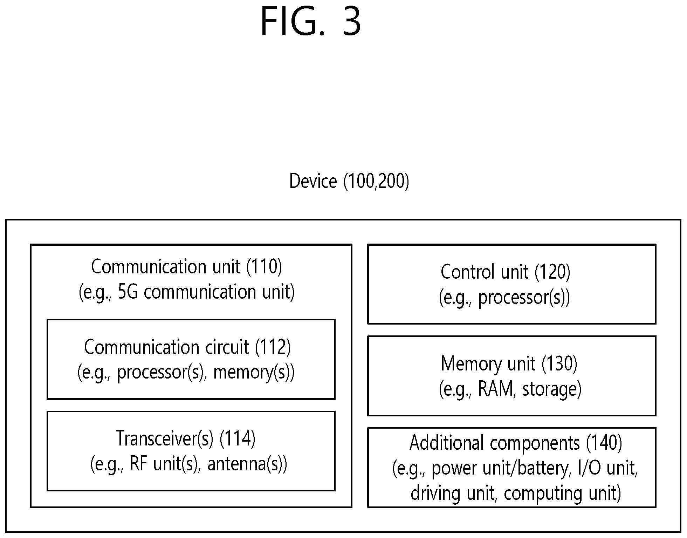

**FIG. 3** **shows an example of a wireless device to which implementations of the present disclosure is applied.**

The wireless device may be implemented in various forms according to a use-case/service (refer to FIG. 1).

Referring to FIG. 3, wireless devices 100 and 200 may correspond to the wireless devices 100 and 200 of FIG. 2 and may be configured by various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 of FIG. 2 and/or the one or more memories 104 and 204 of FIG. 2. For example, the transceiver(s) 114 may include the one or more transceivers 106 and 206 of FIG. 2 and/or the one or more antennas 108 and 208 of FIG. 2. The control unit 120 is electrically connected to the communication unit 110, the memory unit 130, and the additional components 140 and controls overall operation of each of the wireless devices 100 and 200. For example, the control unit 120 may control an electric/mechanical operation of each of the wireless devices 100 and 200 based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of the wireless devices 100 and 200. For example, the additional components 140 may include at least one of a power unit/battery, input/output (I/O) unit (e.g., audio I/O port, video I/O port), a driving unit, and a computing unit. The wireless devices 100 and 200 may be implemented in the form of, without being limited to, the robot (100a of FIG. 1), the vehicles (100b-1 and 100b-2 of FIG. 1), the XR device (100c of FIG. 1), the hand-held device (100d of FIG. 1), the home appliance (100e of FIG. 1), the IoT device (100f of FIG. 1), a digital broadcast terminal, a hologram device, a public safety device, an MTC device, a medicine device, a FinTech device (or a finance device), a security device, a climate/environment device, the AI server/device (400 of FIG. 1), the BSs (200 of FIG. 1), a network node, etc. The wireless devices 100 and 200 may be used in a mobile or fixed place according to a use-example/service.

In FIG. 3, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor (AP), an electronic control unit (ECU), a graphical processing unit, and a memory control processor. As another example, the memory unit 130 may be configured by a RAM, a DRAM, a ROM, a flash memory, a volatile memory, a non-volatile memory, and/or a combination thereof.

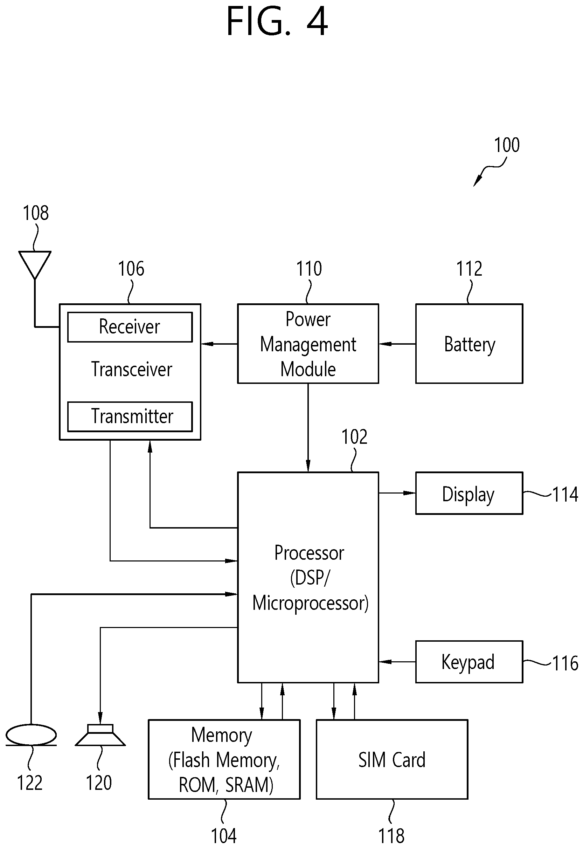

**FIG. 4** **shows an example of UE to which implementations** of the **present disclosure is applied.**

Referring to FIG. 4, a UE 100 may correspond to the first wireless device 100 of FIG. 2 and/or the wireless device 100 or 200 of FIG. 3.

A UE 100 includes a processor 102, a memory 104, a transceiver 106, one or more antennas 108, a power management module 110, a battery 112, a display 114, a keypad 116, a subscriber identification module (SIM) card 118, a speaker 120, and a microphone 122.

The processor 102 may be configured to implement the descriptions, functions, procedures, suggestions, methods and/or operational flowcharts disclosed in the present disclosure. The processor 102 may be configured to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of a digital signal processor (DSP), a central processing unit (CPU), a graphics processing unit (GPU), a modem (modulator and demodulator). An example of the processor 102 may be found in SNAPDRAGON^{™} series of processors made by Qualcomm^{®}, EXYNOS^{™} series of processors made by Samsung^{®}, a series of processors made by Apple^{®}, HELIO^{™} series of processors made by MediaTek^{®}, ATOM^{™} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 110 manages power for the processor 102 and/or the transceiver 106. The battery 112 supplies power to the power management module 110.

The display 114 outputs results processed by the processor 102. The keypad 116 receives inputs to be used by the processor 102. The keypad 116 may be shown on the display 114.

The SIM card 118 is an integrated circuit that is intended to securely store the international mobile subscriber identity (IMSI) number and its related key, which are used to identify and authenticate subscribers on mobile telephony devices (such as mobile phones and computers). It is also possible to store contact information on many SIM cards.

The speaker 120 outputs sound-related results processed by the processor 102. The microphone 122 receives sound-related inputs to be used by the processor 102.

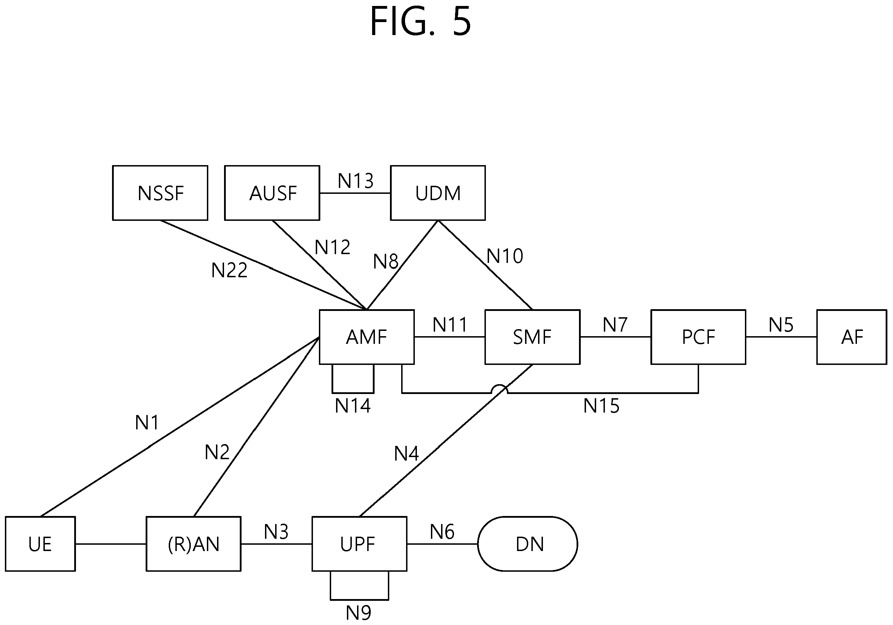

FIG. 5 **shows examples of** 5G **system architectures.**

The 5G system (5GS; 5G system) structure consists of the following network functions (NFs).
- AUSF (Authentication Server Function)
- AMF (Access and Mobility Management Function)
- DN (Data Network), e.g., operator services, internet access or third-party services
- USDF (Unstructured Data Storage Function)
- NEF (Network Exposure Function)
- I-NEF (Intermediate NEF)
- NRF (Network Repository Function)
- NSSF (Network Slice Selection Function)
- PCF (Policy Control Function)
- SMF (Session Management Function)
- UDM (Unified Data Management)
- UDR (Unified Data Repository)
- UPF (User Plane Function)
- UCMF (UE radio Capability Management Function)
- AF (Application Function)
- UE (User Equipment)
- (R)AN ((Radio) Access Network)
- 5G-EIR (5G-Equipment Identity Register)
- NWDAF (Network Data Analytics Function)
- CHF (Charging Function)

In addition, the following network functions may be considered.
- N3IWF (Non-3GPP InterWorking Function)
- TNGF (Trusted Non-3GPP Gateway Function)
- W-AGF (Wireline Access Gateway Function)

FIG. 5 shows the 5G system structure of a non-roaming case using a reference point representation that shows how various network functions interact with each other.

In FIG. 5, UDSF, NEF and NRF are not described for clarity of the point-to-point diagram. However, all network functions shown may interact with UDSF, UDR, NEF and NRF as needed.

For clarity, the connection between the UDR and other NFs (e.g., PCFs) is not shown in FIG. 5. For clarity, the connection between NWDAF and other NFs (e.g. PCFs) is not shown in FIG. 5.

The 5G system architecture includes the following reference points.
- N1: the reference point between the UE and the AMF.
- N2: reference point between (R)AN and AMF.
- N3: Reference point between (R)AN and UPF.
- N4: reference point between SMF and UPF.
- N6: Reference point between UPF and data network.
- N9: reference point between two UPFs.

The following reference points show the interactions that exist between NF services in NF.
- N5: Reference point between PCF and AF.
- N7: reference point between SMF and PCF.
- N8: reference point between UDM and AMF.
- N10: reference point between UDM and SMF.
- N11: reference point between AMF and SMF.
- N12: reference point between AMF and AUSF.
- N13: reference point between UDM and AUSF.
- N14: reference point between two AMFs.
- N15: Reference point between PCF and AMF in case of non-roaming scenario, and reference point between PCF and AMF of visited network in case of roaming scenario.
- N16: reference point between two SMFs (in case of roaming, between the SMF of the visited network and the SMF of the home network)
- N22: reference point between AMF and NSSF.

In some cases, it may be necessary to connect two NFs to each other to service the UE.

This section describes vehicle-to-everything (V2X) communication. For V2X communications, the following definitions may be used:
- V2X application: An application that uses one or more V2X services (e.g., active safety applications in the vehicle, emergency alerts, vehicle safety and awareness, etc. A V2X application may act towards a V2X application server.
- V2X Communication: Communication to support V2X services utilizing Uu and/or PC5 reference points. V2X services are implemented through various types of V2X applications, including vehicle-to-vehicle (V2V), vehicle-to-pedestrian (V2P), vehicle-to-infrastructure (V2I), and vehicle-to-network (V2N).
- V2X message: A type of messaging dedicated to V2X services (e.g., intelligent transport system (ITS) messages).
- V2X Service: A data service provided to V2X applications and optionally to V2X application servers. A V2X service belongs to one V2X service type. A V2X service is associated with one or more V2X applications, and a V2X application may be associated with one or more V2X services.
- V2X service type: A type of V2X service identified by an ITS application identifier (ITS-AID) or provider service identifier (PSID), etc.

There are two modes of operation for V2X communication: V2X communication via PC5 reference point and V2X communication via Uu reference point. These two modes of operation may be used independently by UEs for transmitting and receiving.

V2X communication over PC5 reference point is supported by LTE and/or NR.

V2X communication over Uu reference point is supported by E-UTRA connected to SGC and/or NR connected to 5GC. V2X communication over the Uu reference point may be unicast only.

### < V2X(vehicle-to-verythihg) >

V2X refers to a technology that enables communication between vehicles and all their interfaces. V2X may be implemented in the following ways.

First, the 'X' in V2X may also be a vehicle (VEHICLE). In this case, V2X may be labeled as V2V V2V (vehicle-to-vehicle), which may refer to communication between vehicles.

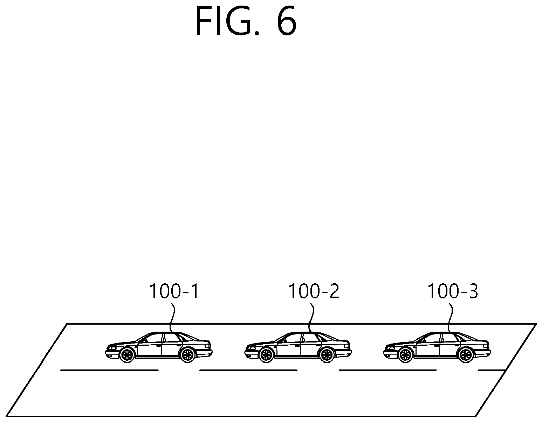

**FIG. 6** **is an example diagram illustrating the concept of V2X.**

As can be seen with reference to FIG. 6, vehicles (i.e., wireless devices mounted on the vehicles) 100-1, 100-2, and 100-3 may communicate with each other.

In one aspect, "X" in V2X may refer to a person (Persian) or a pedestrian (PEDESTRIAN). In this case, V2X can be denoted as V2P (vehicle-to-person or vehicle-to-pedestrian). Here, pedestrians are not necessarily limited to people traveling on foot, but can also include people on bicycles, drivers or passengers of vehicles (below a certain speed).

Alternatively, "X" could be Infrastructure/Network. In this case, V2X can be labeled vehicle-to-infrastructure (V2I) or vehicle-to-network (V2N) and can refer to communication between a vehicle and a roadside unit (RSU) or a vehicle and a network. A roadside unit can be a piece of transportation-related infrastructure, such as a device that indicates speed. The roadside unit may be implemented in a base station or a fixed terminal, for example.

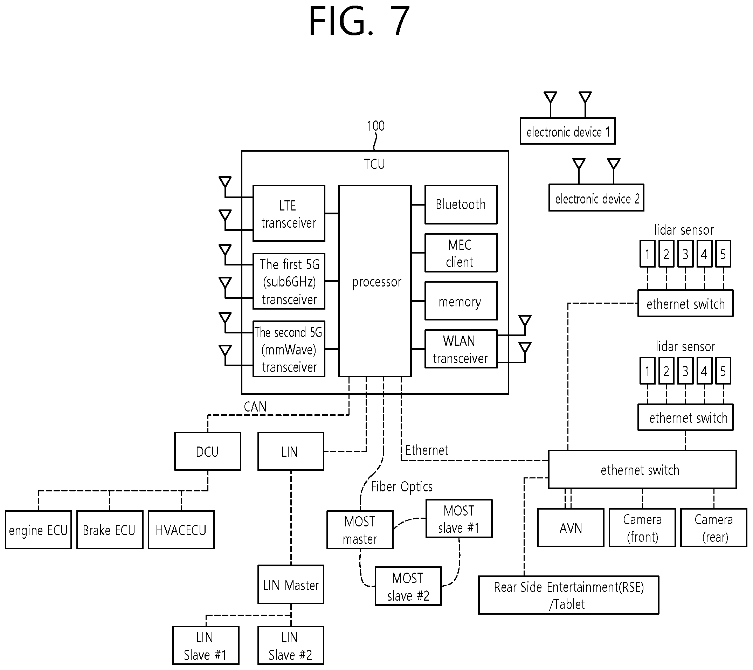

**FIG. 7** **is an illustrative diagram of a configuration of a communication device installed on a vehicle for** V2X **communication.**

As shown in FIG. 7, the communication device installed in the vehicle may be referred to as a Telematics Communication Unit (TCU).

The TCU may include an LTE transceiver (i.e., an LTE modem/antenna), a first 5G transceiver (i.e., a modem/antenna utilizing sub 6 GHz), a second 5G transceiver (i.e., a modem/antenna utilizing mmWave), a WLAN transceiver (i.e., a WiFi transceiver), a processor, and memory. The LTE transceiver is a communication module that performs communications based on the LTE standard. A first 5G transceiver (i.e., a modem/antenna utilizing sub 6 GHz) is a communication module that performs communications based on the 5G standard in the FR 1 band. The second 5G transceiver (i.e., modem/antenna utilizing mmWave) is a communication module that performs communication based on the 5G standard in the FR 2 band. The WLAN transceiver (i.e., WiFi transceiver) is a communication module that performs communication based on the WiFi standard. The LTE transceiver, the first 5G transceiver (i.e., a modem/antenna utilizing sub 6 GHz), the second 5G transceiver (i.e., a modem/antenna utilizing mmWave), and the WLAN transceiver (i.e., a WiFi transceiver) may be connected to a processor via an interface such as PCIe (PCI express). Also, although the LTE transceiver, the first 5G transceiver (i.e., modem/antenna utilizing sub 6 GHz), the second 5G transceiver (i.e., modem/antenna utilizing mmWave), and the WLAN transceiver (i.e., WiFi transceiver) are illustrated as separate objects, A single communication module may perform the functions of an LTE transceiver, a first 5G transceiver (i.e., a modem/antenna utilizing sub 6 GHz), a second 5G transceiver (i.e., a modem/antenna utilizing mmWave), and a WLAN transceiver (i.e., a WiFi transceiver).

The processor of the TCU is coupled to a first 5G transceiver (i.e., a modem/antenna utilizing sub 6 GHz), a second 5G transceiver (i.e., a modem/antenna utilizing mmWave), a WLAN transceiver (i.e., a WiFi transceiver), and memory. The memory may store the MEC client app. The processor may receive data transmitted by the base stations or the terminals (i.e., the terminal 1 and the terminal 2) using the LTE transceiver, the first 5G transceiver (i.e., the modem/antenna utilizing sub 6 GHz), the second 5G transceiver (i.e., the modem/antenna utilizing mmWave), and the WLAN transceiver (i.e., the WiFi transceiver). The processor may transmit data to the base station or the terminals (terminal 1 and terminal 2) using the LTE transceiver, the first 5G transceiver (i.e., a modem/antenna utilizing sub 6 GHz), the second 5G transceiver (i.e., a modem/antenna utilizing mmWave), and the WLAN transceiver (i.e., a WiFi transceiver). Here, the terminals (terminal 1 and terminal 2) may be wireless communication devices used by users in the vehicle.

The processor of the TCU may be associated with devices in the vehicle. For example, the processor may be associated with a Domain Control Unit (DCU), a Local Interconnect Network (LIN) master, a Media Oriented System Transport (MOST) master, and an Ethernet switch. The processor in the TCU can communicate with the DCU using Controller Area Network (CAN) communication technology. The TCU's processor can communicate with a LIN master using Local Interconnect Network (LIN) communication technology. The TCU's processor can use MOST communication technology to communicate with a MOST master connected by fiber optics. The TCU's processor can communicate with an Ethernet switch and devices connected to the Ethernet switch using Ethernet communication technology.

ADCU is a device that controls a plurality of ECUs. The DCU may communicate with the plurality of ECUs using CAN communication technology. CAN is a standardized communication technology designed for microcontrollers or devices to communicate with each other within a vehicle. CAN is a non-host bus, message-based network protocol that is primarily used for communication between individual controllers.

The DCU can communicate with ECUs such as the Engine ECU, which controls the engine, the Brake ECU, which controls the brakes, and the HVAC ECU, which controls the heating, ventilation, & air conditioning (HVAC) unit. The DCU can transmit data received from the TCU's processor to each ECU. The DCU can also send data received from each ECU to the TCU's processor.

The LIN Master can communicate with the LIN Slaves (LIN Slave #1 and LIN Slave #2) using LIN communication technology. For example, LIN Slave #1 may be a slave that controls one of a steering wheel, a roof top, a door, a seat, and a small motor. Here, LIN is a serial communication technology for communication between components in an automotive network. The LIN master may receive data from the TCU's processor and transmit it to the LIN slaves (LIN Slave #1 and LIN Slave #2). The LIN master can also transmit data received from the LIN slaves to the TCU's processor.

The MOST master can communicate with the MOST slaves (MOST Slave #1 and MOST Slave #2) using MOST communication technology. MOST is a serial communication technology that uses fiber optic cables to transmit audio, video, and control information. The MOST master can transmit data received from the TCU's processor to the MOST slaves. The MOST master can also send data received from MOST slaves to the TCU's processor.

Ethernet is a computer networking technology used in local area networks (LANs), metropolitan area networks (MANs), and wide area networks (WANs). The TCU's processor can use Ethernet communication technology to send data to each device through an Ethernet switch. Each device can use Ethernet communication technology to send data to the TCU's processor through an Ethernet switch.

Radar (radio detection and ranging) is a technology that uses radio waves to measure the distance, direction, angle, and speed of a target. Radar sensors 1 to 5 are provided on the vehicle to measure the distance, direction, angle, and speed of objects around the vehicle. The radar sensors 1 to 5 can transmit the measured sensor data to the processor of the TCU.

LiDAR (light detection and ranging) is a sensing technology that uses a light source and a receiver to detect and distance remote objects. Specifically, LiDAR is a technology that illuminates a target with pulsed laser light and measures the pulses reflected back to a sensor to measure the distance, intensity, speed, etc. to the target. Lidar sensors 1 to 5 measure the distance, speed, etc. to the target. The lidar sensors 1 to 5 can transmit the measured sensor data to the TCU's processor.

AVN (Audio, Video, Navigation) is a device that provides sound, video, and navigation in a vehicle. The AVN can receive data from the TCU's processor using Ethernet communication technology and provide sound, video, and navigation based on the received data. The AVN can transmit data to the TCU's processor using Ethernet communication technology.

The camera (front) and the camera (rear) may capture images from the front and rear of the vehicle. In FIG. 7, only one camera is shown in the front and one in the rear, but this is for illustrative purposes only, and cameras may also be provided on the left and right sides. There may also be a plurality of cameras at each of the front and rear. The cameras may use Ethernet communication technology to transmit camera data to the processor of the TCU and may receive data from the processor of the TCU.

Rear Side Entertainment (RSE) means rear seat entertainment. RSE is a device that is mounted behind the passenger seat or behind the driver's seat of a vehicle to provide entertainment to the occupants. A tablet may also be placed inside the vehicle. The RSE or tablet may receive data from the TCU's processor and transmit data to the TCU's processor using Ethernet communication technology.

### <Measurement on Sidelink>

### 1. PSSCH reference signal received power (PSSCH-RSRP)

The PSSCH reference signal received power (PSSCH-RSRP) is defined as the linear average of the power contribution ([W]) of the resource elements carrying the demodulation reference signals associated with the physical sidelink shared channel (PSSCH).

For frequency range 1 (FR1), the reference point for PSSCH-RSRP shall be the antenna connector of the UE. For FR2 (frequency range 2), the PSSCH-RSRP shall be measured based on the combined signal of the antenna elements corresponding to a given receiver branch. For FR1 and FR2, if receiver diversity is being used by the UE, the reported PSSCH-RSRP value shall not be lower than the corresponding PSSCH-RSRP of the individual receiver branches.

PSSCH-RSRP may be applied to RRC_IDLE intra-frequency, RRC_IDLE inter-frequency and RRC_CONNECTED inter-frequency.

### 2. PSCCH reference signal received power (PSCCH-RSRP)

PSCCH reference signal received power (PSCCH-RSRP) is defined as the linear average of the power contribution ([W]) of the resource elements carrying the demodulation reference signals associated with the physical sidelink control channel (PSCCH).

For frequency range 1 (FR1), the reference point for PSCCH-RSRP shall be the antenna connector of the UE. For FR2 (frequency range 2), the PSCCH-RSRP shall be measured based on the combined signal of the antenna elements corresponding to a given receiver branch. For FR1 and FR2, if receiver diversity is in use by the UE, the reported PSCCH-RSRP value shall not be lower than the corresponding PSCCH-RSRP of the individual receiver branches.

PSCCH-RSRP may be applied to RRC_IDLE intra-frequency, RRC_IDLE inter-frequency and RRC _CONNECTED inter-frequency.

### 3. Sidelink received signal strength indicator (SL RSSI)

The Sidelink Received Signal Strength Indicator (SL RSSI) is defined as the linear average of the total received power ([W] unit) observed in the subchannels set by the OFDM symbols in the slots configured for PSCCH and PSSCH, starting from the second OFDM symbol.

For FR1 (frequency range 1), the reference point of the SL RSSI shall be the antenna connector of the UE. For FR2 (frequency range 2), the SL RSSI shall be measured based on the combined signal of the antenna elements corresponding to a given receiver branch. For FR1 and FR2, if receiver diversity is being used by the UE, the reported SL RSSI value shall not be lower than the corresponding SL RSSI of the individual receiver branches.

The SL RSSI may be applied to RRC_IDLE intra-frequency, RRC_IDLE inter-frequency, RRC_CONNECTED intra-frequency and RRC _CONNECTED inter-frequency.

### <Problems solved by the disclosure of this specification>

A terminal with SL-DRX may transmit and receive sidelink signaling in the DRX on duration. To transmit and receive signals, the terminal may
change the RF from off to on at the start of the DRX on duration. Similarly, the terminal may change RF from on to off at the end of a DRX on duration. Such RF on/off changes may cause interference to other carriers. Provisions have been made in the prior art for such interruptions.

In order to transmit or receive a sidelink signal in the DRX on duration, the terminal performs a resource sensing before transmitting or receiving the signal. The terminal shall turn on the RF to perform the sensing. Since the RF is off in the DRX off duration, the terminal shall change the RF to on state in order to perform sensing in the DRX off duration. This RF on/off change may cause interference to other carriers. Currently, the interference caused by sensing in the DRX off duration is not defined, which is a problem.

### <Disclosure of the present specification>

A terminal device (e.g., smartphone, automobile, robot, etc.) that supports sidelink communication may measure the signal strength (e.g., RSSI, RSRP, etc.) of signals transmitted by neighboring terminals for a given resource (e.g., resource pool, BWP, etc.) in order to transmit data. Based on the measurement results, the terminal may transmit signals through unoccupied resources. For example, in the case of V2X communication, the V2X terminal may sense a resource by measuring RSRP or RSSI through a sensing window for x msec before transmitting a signal. Based on the measurement results, the terminal may determine a set of transmittable resources and select the final transmission resource through the selection window. If the terminal with SL-DRX configured performs sensing in a sensing window duration, the sensing window may be located while the terminal is in the DRX off state. In this case, the terminal changes from RF off to RF on. In the case of simultaneous support of sidelink and WAN (LTE, NR, etc.), the above change may cause interference to other serving carriers. Also, depending on the RF structure of the terminal, V2X sensing operation may be limited when WAN and V2X are supported by shared RF. This specification describes the interference caused by the sensing operation when SL-DRX is set and the V2X sensing operation depending on the RF structure.

The V2X terminal may be configured with SL-DRX for power saving, i.e., it may perform data reception operation in the DRX on duration based on a set period (e.g., 640 msec) and turn off the terminal RF in the DRX off duration to save power. Before the V2X terminal transmits the sidelink signal, the V2X terminal may start the sensing operation a certain time ahead of time to set a candidate resource. In this case, the terminal shall change the RF from off to on for sensing operation during the non-DRX on duration. This change may cause interruption as described above.

There are full sensing-based, partial sensing-based, and random resource methods for candidate resource selection. The network may set the candidate resource selection method to one of the three methods or a combination of two or more of the three methods to select a candidate resource for the terminal.

### I. Interruption due to V2X sensing

### 1. resource selection based on full sensing

In the case of resource selection based on full sensing, the terminal may perform RSSI (or RSRP) measurement during the sensing window. The device may always perform receive operation during the sensing window for measurement. Therefore, the device may switch the RF on/off at the beginning and end of the sensing window, which may cause interference. If the start or end of the sensing window duration overlaps with the on duration of SL-DRX, the above interruption may not occur. This is because the RF is on during the SL-DRX on duration, so there is no need to change the RF on/off.

In the case of resource selection based on full sensing, maximum two interruptions may occur in the sensing window, i.e., maximum two interruptions may be allowed. To minimize interruptions, the start and end points of the sensing window duration may be set within the on-duration of the SL-DRX.

The following drawings are intended to illustrate specific embodiments of the present disclosure. The names of specific devices or the names of specific signals/messages/fields shown in the drawings are for illustrative purposes only, so that the technical features of the present specification are not limited to the specific names used in the drawings.

### 2. Resource selection based on partial sensing

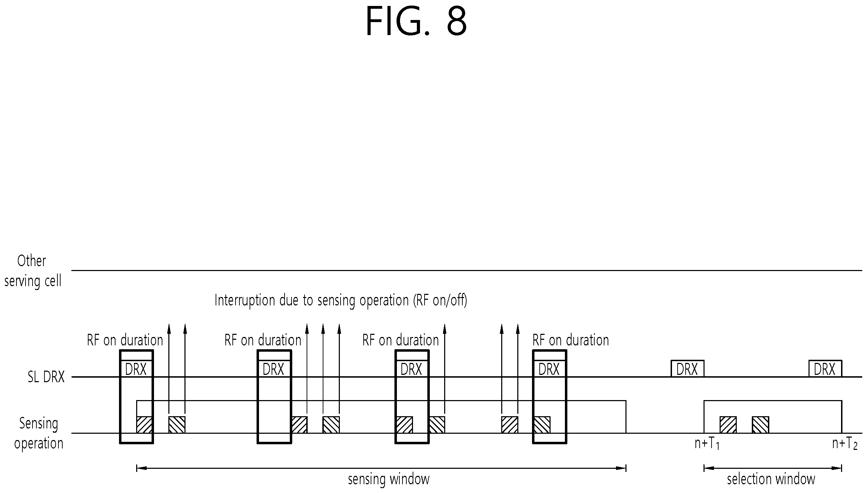

**FIG. 8** **illustrates an example of interference in partial sensing according to the disclosure of the present specification.**

In the case of resource selection based on partial sensing, the terminal may perform sensing operations in a set duration instead of performing sensing operations all the time during the sensing window. When the terminal performs sensing operations, it may perform sensing by turning on RF in the duration where DRX is off. When the terminal finishes sensing, the terminal may turn RF off again.

In this case, RF on/off in the DRX off duration may cause interference to other serving carriers.

If the terminal performs partial sensing, interference due to partial sensing may occur in addition to the interference caused by SL-DRX.

### (1) Interruption caused by SL-DRX

Table 3 shows the interruptions caused by SL-DRX. The interruption slot in which the interruption occurs may be determined. Depending on the SL-DRX cycle (SL-DRX cycle is an example), the interruption percentage and missed ACK/NACK percentage may be considered as shown in Table 3.

**[Table 3]**

| | SL-DRX cycle [msec] | | | | | | | | |
|---|---|---|---|---|---|---|---|---|---|
| | 40 | 80 | 128 | 160 | 256 | 320 | 512 | 640 | 1 2 8 0 |
| interruption [slot] | 2 | 2 | 2 | 2 | 2 | 2 | 2 | 2 | 2 |
| % of interruption | 5 | 2.5 | 1.563 | 1.25 | 0.781 | 0.625 | 0.391 | 0.313 | 0. 1 5 6 |
| % of missed ACK/NACK | 10 | 5 | 3.125 | 2.5 | 1.563 | 1.25 | 0.781 | 0.625 | 0. 3 1 3 |

The interruption slot indicates the number of slots where interference occurs in one SL-DRX on duration, i.e., one slot of interference may be caused by a change from RF off to on in the SL-DRX on duration, and one slot of interference may be caused by a change from RF on to off in the SL-DRX on duration. A total of 2 slots may be interrupted. The interruption time maybe the value of 'SL-DRX cycle' multiplied by '% of interruption'. For successful ACK/NACK, there should be no interruption not only in the slot receiving data but also in the slot transmitting ACK/NACK. Therefore,'% of missed ACK/NACK' may have twice the value of'% of interruption'.

### (2) Interruption due to partial sensing operation

If all interruptions caused by partial sensing operation are considered in the interruptions caused by SL-DRX, excessive interruptions may affect data transmission or reception performance. Therefore, even when the SL-DRX cycle is small, the interruption percentage may be as high as 2.5% or 5%, which may cause data transmission or reception problems. To solve this problem, the overall interruption percentage or the missed ACK/NACK percentage may be limited. For example, a missed ACK/NACK percentage of 1% or 1.25% may be considered when the SL-DRX cycle is less than 640 msec, and a missed ACK/NACK percentage of 0.625% may be limited when the SL-DRX cycle is more than 640 msec.

In particular, when partial sensing operation is set, the network does not know when interruption occurs because the network does not know the sensing window of the terminal, so it is necessary to consider the impact of interruption with the interruption percentage or missed ACK/NACK percentage.

The interruption caused by sensing may be applied the same as the conventional values specified for the interruption caused by SL-DRX, i.e., '% of interruption' and '% of missed ACK/NACK' in Table 3 may be applied to the interruption caused by sensing. For example, if the SL-DRX cycle is 640 ms, a sensing interruption may cause `% of interruption' of 0.313 and `% of missed ACK/NACK' of 0.625.

Table 4 shows the interruption percentage and missed ACK/NACK percentage considering two additional sensing interruption slots in addition to the existing interruption caused by the SL-DRX.

**[Table 4]**

| | SL-DRX cycle [msec] | | | | | | | | |
|---|---|---|---|---|---|---|---|---|---|
| | 40 | 80 | 128 | 160 | 256 | 320 | 512 | 640 | 1 2 8 0 |
| interruption [slot] | 2 | 2 | 2 | 2 | 2 | 2 | 2 | 2 | 2 |
| % of interruption | 10 | 5 | 3.125 | 2.5 | 1.563 | 1.25 | 0.781 | 0.625 | 0. 3 1 3 |
| % of missed ACK/NACK | 20 | 10 | 6.25 | 5 | 3.125 | 2.5 | 1.563 | 1.25 | 0. 6 2 5 |

The value generated by adding i) the '% of interruption' value generated by sensing to ii) the existing '% of interruption' value generated by the SL-DRX described in Table 3 is shown in Table 4. For example, when the SL-DRX cycle is 3200 msec, the '% of interruption' caused by SL-DRX is 0.625 and the '% of interruption' caused by sensing is 0.625. Therefore, the '% of interruption' considering both the interruption caused by SL-DRX and the interruption caused by sensing is 1.25. Similarly, if the interruption caused by sensing is additionally considered, the % of interruption may be double the % of interruption considering only the interruption caused by SL-DRX.

The interruption[slot] in Table 4 refers to the slot where the interruption due to sensing occurs.

The '% of interruption' and '% of missed ACK/NACK' in Table 4 are values that take into account both interruptions caused by SL-DRX and interruptions caused by sensing.

For example, when the SL-DRX cycle is 640 msec, the '% of interruption' caused by SL-DRX is 0.313. The '% of interruption' that take into account both SL-DRX and sensing is 0.625.

For the interruption percentage or missed ACK/NACK percentage due to sensing operation, interruption larger than the interruption percentage or missed ACK/NACK percentage due to DRX on-off change in SL-DRX should be allowed. Specifically, the interruption percentage or missed ACK/NACK percentage due to the sensing operation may be twice the interruption percentage or missed ACK/NACK percentage due to the DRX on-off change in SL-DRX.

A missed ACK/NACK percentage of X% (e.g., X=1.5 or 2) may be considered when SL-DRX cycle is less than 640 msec and a missed ACK/NACK percentage of Y% (e.g., Y=1 or 1.25) may be considered when SL-DRX cycle is greater than 640 msec.

The network may request the sensing window information from the terminal so that the network can consider the interruption period caused by the terminal sensing operation in SL-DRX, and the terminal may report the determined sensing window and the sensing window start time to the network.

### II. Sensing operation according to RF structure of the terminal

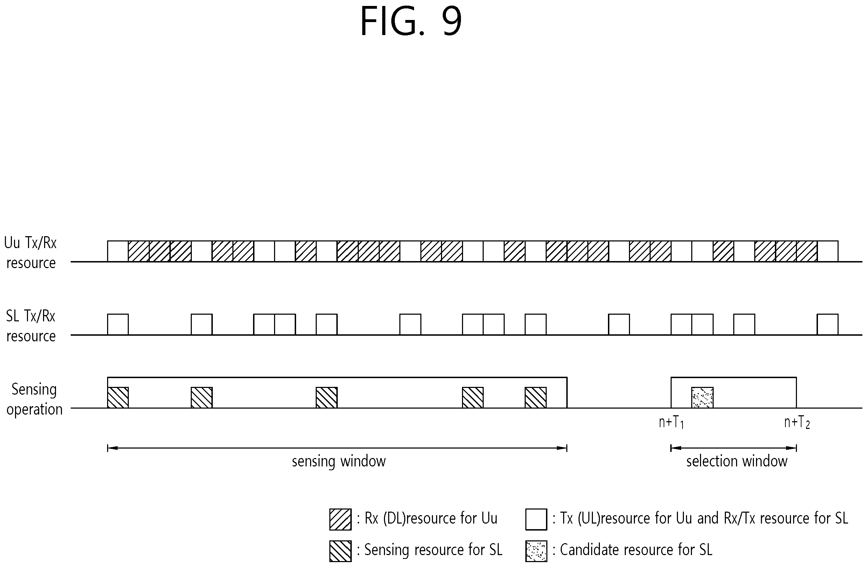

**FIG. 9** **shows a sensing operation in a Uu link and a sidelink according to disclosure of the present specification.**

A terminal may support WAN (Uu) and V2X (SL) based on a shared RF structure. For example, WAN and V2X may be supported simultaneously by TDM in one licensed band (n79). Since the sidelink is transmitted and received on Uu's Tx (uplink) resource, the terminal may perform sidelink transmission or reception operations when Uu's uplink resource does not exist.

Therefore, if the network sets the resource selection based on full sensing or partial sensing for the sidelink signal transmission of the terminal, there may be a case that the sensing operation cannot be performed due to Uu uplink. The terminal may then fail to measure RSRP or RSSI for a candidate resource on the sensing resource configured by the network or preconfigured on the terminal.

To reduce the interruption to the SL caused by the lack of accuracy of the sensing results, the terminal may select a Tx resource through random resource selection if the terminal fails to perform a sensing operation on the sensing resource more than Z% (e.g., Z=10, 20, 30, ...). The Z value may be configure according to the packet priority (importance) from the network and may be pre-configured in the terminal.

If i) the terminal has a separated RF structure, ii) SL-DRX is configured, and iii) RF is not turned on in the sensing resource of the DRX off duration for power saving, the terminal may select the Tx resource through random resource selection if the sensing operation for the candidate resource is not performed with a certain probability or higher according to the Z% mentioned above.

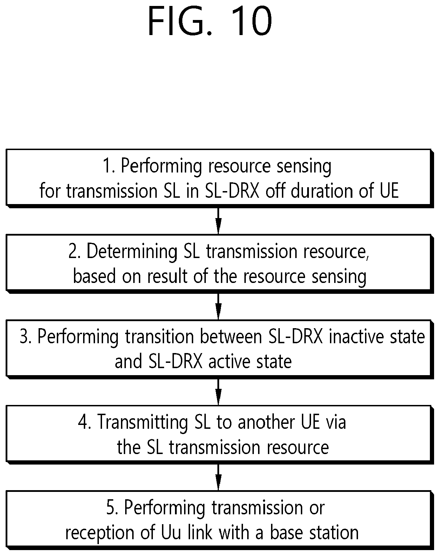

**FIG. 10** **shows the procedure of the UE according to the disclosure of this specification.**
1. The UE may perform resource sensing for transmitting SL (sidelink) signal on duration of SL-DRX (SL-Discontinuous Reception) off state.
2. The UE may determine SL transmission resource, based on a result of the resource sensing.
3. The UE may perform transition between the SL-DRX off state and SL-DRX on state.
4. The UE may transmit SL signal to another UE via the SL transmission resource in the SL-DRX on state.
5. The UE may perform transmission or reception Uu link (uplink and downlink) signal with a base station.

Interruption on a first slot may occur due to the resource sensing.

Interruption on a second slot may occur due to the transition.

The UE may skip to perform the transmission or reception Uu link signal.

The number of the first slot and the number of the second slot may be two.

Cycle of the SL-DRX may be more than 640 ms.

A possibility of missed ACK/NACK (Acknowledgement/Negative Acknowledgement) for the first slot may be 0.625 %.

A possibility of missed ACK/NACK for the second slot may be 0.625 %.

Based on a probability of failure of the resource sensing exceeding a threshold,

The step of determining the SL transmission resource may be determined randomly.

The UE may transmit, to an network, information on the first slot.

A duration of the SL-DRX on state may be a duration in which at least one of the onDuration timer, Inactivity timer, or Retransmission timer is running.

The duration of the SL-DRX off state may be a duration other than the duration of the SL-DRX on state.

Hereinafter, an apparatus for performing communication according to some embodiments of the present specification will be described.

For example, a UE may include a processor, a transceiver, and a memory.

For example, a processor may be configured to be operably coupled with a memory and a processor.

The processor may perform: performing resource sensing for transmitting SL (sidelink) signal on duration of SL-DRX (SL-Discontinuous Reception) off state; determining SL transmission resource, based on a result of the resource sensing; performing transition between the SL-DRX off state and SL-DRX on state; transmitting SL signal to another UE via the SL transmission resource in the SL-DRX on state; performing transmission or reception Uu link (uplink and downlink) signal with a base station, wherein interruption on a first slot occurs due to the resource sensing, wherein interruption on a second slot occurs due to the transition, wherein the UE skips to perform the transmission or reception Uu link signal.

Hereinafter, a processor for providing multi-modality service according to some embodiments of the present specification will be described.

The processor is configured to: performing resource sensing for transmitting SL (sidelink) signal on duration of SL-DRX (SL-Discontinuous Reception) off state; determining SL transmission resource, based on a result of the resource sensing; performing transition between the SL-DRX off state and SL-DRX on state; transmitting SL signal to another UE via the SL transmission resource in the SL-DRX on state; performing transmission or reception Uu link (uplink and downlink) signal with a base station, wherein interruption on a first slot occurs due to the resource sensing, wherein interruption on a second slot occurs due to the transition, wherein the UE skips to perform the transmission or reception Uu link signal.

Hereinafter, a non-volatile computer readable medium storing one or more instructions for providing multicast service in wireless communication according to some embodiments of the present specification will be described.

According to some embodiments of the present disclosure, the technical features of the present disclosure may be directly implemented as hardware, software executed by a processor, or a combination of the two. For example, in wireless communication, a method performed by a wireless device may be implemented in hardware, software, firmware, or any combination thereof. For example, the software may reside in RAM memory, flash memory, ROM memory, EPROM memory, EEPROM memory, registers, hard disk, removable disk, CD-ROM, or other storage medium.

Some examples of a storage medium are coupled to the processor such that the processor can read information from the storage medium. Alternatively, the storage medium may be integrated into the processor. The processor and storage medium may reside in the ASIC. For another example, a processor and a storage medium may reside as separate components.

Computer-readable media can include tangible and non-volatile computer-readable storage media.

For example, non-volatile computer-readable media may include random access memory (RAM), such as synchronization dynamic random access memory (SDRAM), read-only memory (ROM), or non-volatile random access memory (NVRAM). Read-only memory (EEPROM), flash memory, magnetic or optical data storage media, or other media that can be used to store instructions or data structures or Non-volatile computer readable media may also include combinations of the above.

Further, the methods described herein may be realized at least in part by computer-readable communication media that carry or carry code in the form of instructions or data structures and that can be accessed, read, and/or executed by a computer.

According to some embodiments of the present disclosure, a non-transitory computer-readable medium has one or more instructions stored thereon. The stored one or more instructions may be executed by a processor of the base station.

The stored one or more instructions cause the processors to: performing resource sensing for transmitting SL (sidelink) signal on duration of SL-DRX (SL-Discontinuous Reception) off state; determining SL transmission resource, based on a result of the resource sensing; performing transition between the SL-DRX off state and SL-DRX on state; transmitting SL signal to another UE via the SL transmission resource in the SL-DRX on state; performing transmission or reception Uu link (uplink and downlink) signal with a base station, wherein interruption on a first slot occurs due to the resource sensing, wherein interruption on a second slot occurs due to the transition, wherein the UE skips to perform the transmission or reception Uu link signal.

The present specification may have various effects.

For example, by defining the interruption caused by resource sensing in the SL-DRX off duration, resource sensing can be performed at SL-DRX off duration.

Effects that can be obtained through specific examples of the present specification are not limited to the effects listed above. For example, various technical effects that a person having ordinary skill in the related art can understand or derive from this specification may exist. Accordingly, the specific effects of the present specification are not limited to those explicitly described herein, and may include various effects that can be understood or derived from the technical characteristics of the present specification.

The claims described herein may be combined in various ways. For example, the technical features of the method claims of the present specification may be combined and implemented as an apparatus, and the technical features of the apparatus claims of the present specification may be combined and implemented as a method. In addition, the technical features of the method claim of the present specification and the technical features of the apparatus claim may be combined to be implemented as an apparatus, and the technical features of the method claim of the present specification and the technical features of the apparatus claim may be combined and implemented as a method. Other implementations are within the scope of the following claims.

## Claims

1. A method for performing SL-DRX (Sidelink discontinuous reception), performed by a UE (User Equipment), comprising:
performing resource sensing for transmitting SL (sidelink) signal on duration of SL-DRX (SL-Discontinuous Reception) off state;
determining SL transmission resource, based on a result of the resource sensing;
performing transition between the SL-DRX off state and SL-DRX on state;
transmitting SL signal to another UE via the SL transmission resource in the SL-DRX on state;
performing transmission or reception Uu link (uplink and downlink) signal with a base station,
wherein interruption on a first slot occurs due to the resource sensing,
wherein interruption on a second slot occurs due to the transition,
wherein the UE skips to perform the transmission or reception Uu link signal.

2. The method of claim 1,
wherein the number of the first slot and the number of the second slot are two.

3. The method of claim 1,
wherein cycle of the SL-DRX is more than 640 ms,
wherein a possibility of missed ACK/NACK (Acknowledgement/Negative Acknowledgement) for the first slot is 0.625 %,
wherein a possibility of missed ACK/NACK for the second slot is 0.625 %.

4. The method of claim 1,
wherein, based on a probability of failure of the resource sensing exceeding a threshold, the step of determining the SL transmission resource is determined randomly.

5. The method of claim 1, further comprising:
transmitting, to an network, information on the first slot.

6. The method of claim 1,
wherein a duration of the SL-DRX on state is a duration in which at least one of the onDuration timer, Inactivity timer, or Retransmission timer is running,
wherein the duration of the SL-DRX off state is a duration other than the duration of the SL-DRX on state.

7. A UE (user equipment), to perform SL-DRX (Sidelink discontinuous reception), comprising:
a transceiver; and
a processor,
wherein the processor performs operation comprising:
performing resource sensing for transmitting SL (sidelink) signal on duration of SL-DRX (SL-Discontinuous Reception) off state;
determining SL transmission resource, based on a result of the resource sensing;
performing transition between the SL-DRX off state and SL-DRX on state;
transmitting SL signal to another UE via the SL transmission resource in the SL-DRX on state;
performing transmission or reception Uu link (uplink and downlink) signal with a base station,
wherein interruption on a first slot occurs due to the resource sensing,
wherein interruption on a second slot occurs due to the transition,
wherein the UE skips to perform the transmission or reception Uu link signal.

8. The UE of claim 7,
wherein the number of the first slot and the number of the second slot are two.

9. The UE of claim 7,
wherein cycle of the SL-DRX is more than 640 ms,
wherein a possibility of missed ACK/NACK (Acknowledgement/Negative Acknowledgement) for the first slot is 0.625 %,
wherein a possibility of missed ACK/NACK for the second slot is 0.625 %.

10. The UE of claim 7,
wherein, based on a probability of failure of the resource sensing exceeding a threshold, the step of determining the SL transmission resource is determined randomly.

11. The UE of claim 7, wherin the operation further comprises
transmitting, to an network, information on the first slot.

12. The UE of claim 7,
wherein a duration of the SL-DRX on state is a duration in which at least one of the onDuration timer, Inactivity timer, or Retransmission timer is running,
wherein the duration of the SL-DRX off state is a duration other than the duration of the SL-DRX on state.

13. An apparatus in mobile communication, comprising:
at least one processor; and
at least one memory storing instructions and operably electrically connectable with the at least one processor, based on the instructions being operated by the at least one processor, performed operation comprising:
performing resource sensing for transmitting SL (sidelink) signal on duration of SL-DRX (SL-Discontinuous Reception) off state;
determining SL transmission resource, based on a result of the resource sensing;
performing transition between the SL-DRX off state and SL-DRX on state;
transmitting SL signal to another apparatus via the SL transmission resource in the SL-DRX on state;
performing transmission or reception Uu link (uplink and downlink) signal with a base station,
wherein interruption on a first slot occurs due to the resource sensing,
wherein interruption on a second slot occurs due to the transition,
wherein the apparatus skips to perform the transmission or reception Uu link signal.

14. A non-volatile computer readable storage medium having recorded instructions,
wherein the instructions, based on being executed by one or more processors, cause the one or more processors to:
performing resource sensing for transmitting SL (sidelink) signal on duration of SL-DRX (SL-Discontinuous Reception) off state;
determining SL transmission resource, based on a result of the resource sensing;
performing transition between the SL-DRX off state and SL-DRX on state;
transmitting SL signal to another UE (User equipment) via the SL transmission resource in the SL-DRX on state;
performing transmission or reception Uu link (uplink and downlink) signal with a base station,
wherein interruption on a first slot occurs due to the resource sensing,
wherein interruption on a second slot occurs due to the transition,
wherein a UE including the non-volatile computer readable storage medium skips to perform the transmission or reception Uu link signal.
